(19) **Europäisches Patentamt**

**European Patent Office**

**Office européen des brevets**

(11) **EP 0 735 084 B1**

(12) **EUROPEAN PATENT SPECIFICATION**

(45) Date of publication and mention
of the grant of the patent:
**12.01.2000 Bulletin 2000/02**

(51) Int Cl.[7]: **C08K 5/3492**, C08K 5/098,
C08K 3/22, C08K 3/26,
C08L 25/04

(21) Application number: **96104792.5**

(22) Date of filing: **26.03.1996**

(54) **Flame retardant thermoplastic styrenic resin composition**

Flammhemmende, thermoplastische Styrolharzzusammensetzung

Composition de résine de styrène thermoplastique retardatrice de flamme

(84) Designated Contracting States:
**NL**

(30) Priority: **30.03.1995 JP 7314595**

(43) Date of publication of application:
**02.10.1996 Bulletin 1996/40**

(73) Proprietor: **DAI-ICHI KOGYO SEIYAKU CO., LTD.
Shimogyo-ku Kyoto (JP)**

(72) Inventors:
• **Nishibori, Setsuo
Shiga (JP)**
• **Ohnishi, Hideaki
Shiga (JP)**
• **Kondo, Hideto
Shimogyo-ku, Kyoto (JP)**

(74) Representative: **Strehl Schübel-Hopf & Partner
Maximilianstrasse 54
80538 München (DE)**

(56) References cited:
**US-A- 5 284 604**

• **CHEMICAL ABSTRACTS, vol. 121, no. 16, 17
October 1994 Columbus, Ohio, US; abstract no.
181211, XP002007816 & JP-A-06 128 410 (DAI
ICHI KOGYO SEIYAKU CO., LTD) 10 May 1994**
• **CHEMICAL ABSTRACTS, vol. 119, no. 10, 6
September 1993 Columbus, Ohio, US; abstract
no. 97074, XP002007817 & JP-A-04 314 749
(DAIICHI KOGYO SEIYAKU CO., LTD.) 5
November 1992**
• **DATABASE WPI Section Ch, Week 7917 Derwent
Publications Ltd., London, GB; Class A18, AN
79-32688B XP002007818 ANONYMOUS: "Heat
resistant polymer compsn. prepn. - from
rubber-reinforced styrene]-maleic anhydride
polymer, fire retardant, rubber reinforcing agent,
antimony oxide and stabilising soap" &
RESEARCH DISCLOSURE, vol. 180, no. 001, 10
April 1979, EMSWORTH, GB,**

**Description**

TECHNICAL FIELD

The present invention relates to a flame retardant thermoplastic styrenic resin composition and more particularly to a thermoplastic styrenic resin composition improved in light resistance, heat resistance, mechanical strength, and flame retardancy, particularly in heat resistance.

BACKGROUND OF THE INVENTION

BRIEF DESCRIPTION OF THE PRIOR ART

Thermoplastic styrenic resin has good processability and physical characteristics and has been used in large quantities in various applications such as household electrical appliances, interior decorations, and architectural materials, among other uses.

However, this type of resin is inflammable, and its molding compositions must be provided with high flame retardancy meeting the legal requirements for fire prevention which are getting more and more rigorous.

Meanwhile, to keep abreast with the ever-diversifying uses for resins of this type, improvements in physical properties have been sought in earnest. Particularly, enhancement of light resistance, heat resistance and mechanical strength, weight reduction, and conservation of resources necessary for production are the major common targets of research endeavor today.

As a technology for imparting fire resistance to thermoplastic styrenic resin, JP-A-53050255 describes a method comprising addition of a brominated aromatic s-triazine compound as a flame retardant together with an ultraviolet absorber and/or ultraviolet stabilizer.

However, the above-mentioned flame retardant is hardly meltable and, hence, does not blend evenly with thermoplastic styrenic resin so that the resultant composition is not sufficiently fire-resistant. Furthermore, the current demand for improvements in light resistance, heat resistance, and mechanical or physical strength characteristics remain to be fulfilled.

Meanwhile, as technologies for improving the heat resistance of thermoplastic resin with a bromine-containing flame retardant, JP-A-60001241 teaches addition of a hydrotalcite, JP-A 06 128 410 teaches the addition of 2,4,6-tris (2,4,6-tribromophenoxy)-1,3,5-triazine with a m.p. of 225-235°C and hydrotalcites, and JP-A-60086143 describes a method comprising concurrent addition of a hydrotalcite and a polyhydric alcohol boric acid ester.

However, when retained at an injection molding temperature exceeding 240°C, for instance, these compositions give rise to silver streaks on the product surface even at the minimum necessary concentration of hydrotalcite for insuring sufficient resistance to thermal discoloration.

It was further known that heat resistant polymer compositions may be prepared from rubber reinforced styrene-maleic anhydride polymers, a fire retardant, rubber reinforcing agent, antimony oxide and a stabilizing amount of a soap type stabilizer, e.g. a barium and/or cadmium salt of a long chain fatty acid (Derwent AN 79-32688B (RD 180 N° 001)).

OBJECT OF THE INVENTION

Having been developed to overcome the above-mentioned disadvantages of the prior art, the present invention has for its object to provide a thermoplastic styrenic resin composition which is capable of providing shaped articles with excellent light resistance, heat resistance, mechanical strength, and flame retardancy.

SUMMARY OF THE INVENTION

The flame retardant styrenic resin composition of the present invention comprises a thermoplastic styrenic resin, 2,4,6-tris(2,4,6-tribromophenoxy)-1,3,5-triazine melting at 225-235°C, and an alkaline earth metal compound that does not comprise other metal atoms than alkaline earth metal atoms, soap type alkaline earth metal compounds being excluded.

In accordance with the present invention, there is provided a thermoplastic styrenic resin composition which is capable of providing shaped articles with improved light resistance, thermal stability, mechanical strength, and particularly high heat resistance.

The flame retardant thermoplastic styrenic resin composition of the present invention is capable of providing shaped articles having improved light resistance and heat resistance with little thermal aging and a minimal degree of die corrosion in the processing temperature range used generally in the injection, extrusion or calendering of thermoplastic styrenic resin.

## DETAILED DESCRIPTION OF THE INVENTION

The principal features of the present invention are now described in detail.

### 1) 2,4,6-Tris(2,4,6-tribromophenoxy)-1,3,5-triazine (hereinafter referred to as TBP-TA)

The TBP-TA to be used in the composition of the present invention is a compound melting at 225-235°C. A crude grade of TBP-TA which melts at any temperature below 225°C or one which contains any impurity that does not melt even at a temperature over 235°C is not acceptable because such TBP-TA detracts from the light resistance and heat resistance of the composition and, moreover, may significantly sacrifice the mechanical strength of shaped articles.
The high-purity TBP-TA melting at 225-235°C can be obtained as the product of a TBP-TA synthetic reaction affording a TBP-TA yield of not less than 90% typically by the procedure comprising adding an aqueous tribromophenolate solution to a solution of cyanuric chloride in a non-hydrophilic solvent in the presence of a phase transfer catalyst at a temperature below the boiling point of the reaction solvent and allowing the reaction system to ripen at a temperature not exceeding the boiling point of reaction solvent for 1-5 hours, and finally removing the non-hydrophilic solvent at reduced or atmospheric pressure.
Thus, by reacting an aqueous tribromophenolate solution of not less than 50 weight % concentration containing a reducing agent with cyanuric chloride in the presence of a phase transfer catalyst, a TBP-TA synthesis reaction product with a TBP-TA yield of not less than 90% is obtained. A high-purity grade of TBP-TA can be obtained more effectively by reacting an aqueous tribromophenolate solution of not less than 50 weight % containing a reducing agent comprising at least one compound selected from the group consisting of phenols, sulfites, and sulfides with cyanuric chloride in the presence of a phase transfer catalyst. By using the reaction product thus obtained (m.p. 225-235°C), there can be provided a thermoplastic styrenic resin composition enabling production of shaped articles with improved light resistance, heat resistance, mechanical strength, and flame retardancy, particularly having remarkably improved heat resistance.
The method for synthesis of TBP-TA is now described in further detail.

(1) Preparation of a tribromophenolate

To prepare a tribromophenolate, an alkali, such as sodium hydroxide, potassium hydroxide or the like, and a reducing agent are dissolved in water, to begin with. To this aqueous solution, after cooling, is added a non-hydrophilic solvent. Then, tribromophenol is added and dissolved, either under heating or under stirring at room temperature. The preferred molar ratio of tribromophenol to alkali is 1:1 - 1.2. By adding a non-hydrophilic solvent in this manner, a highly concentrated aqueous tribromophenolate solution of not less than 50% can be prepared. Moreover, addition of such a non-hydrophilic solvent inhibits the oxidative polymerization of tribromophenol.
In this invention, the concentration of an aqueous tribromophenolate solution is the concentration in terms of tribromophenol. Thus, the concentration of tribromophenol relative to water can be calculated by the following equation.

$$\text{Concentration (\%)} = \frac{\text{Weight of tribromophenol}}{\text{Weight of tribromophenol + weight of water}} \times 100$$

Referring to workability, the preparation of a tribromophenolate can be facilitated by adding a non-hydrophilic solvent beforehand. Moreover, the aqueous tribromophenolate solution so prepared has a high specific gravity so that the aqueous layer separates readily from the non-hydrophilic solvent layer. The tribromophenolate is insoluble in the non-hydrophilic solvent. Therefore, by withdrawing the separated non-hydrophilic solvent and dissolving a fresh batch of tribromophenol therein, a large quantity of the tribromophenolate can be prepared even when the reactor is of limited capacity. The withdrawn non-hydrophilic solvent can be used as it is as the reaction solvent. In terms of productivity, too, since a large quantity of the tribromophenolate can be produced per unit reactor capacity, the output of tris(tribromophenoxy)-s-triazine per reaction can be increased. Furthermore, the amount of water finding its way into the reactor is so small that the hydrolysis of cyanuric chloride can be held at a minimum and the reaction can be conducted in dispersion, not requiring to completely dissolve cyanuric chloride in the non-hydrophilic solvent. In addition, when cyanuric chloride can be so handled, its powder can be directly added to the tribromophenolate solution for reaction.
The upper limit concentration of the aqueous tribromophenolate solution in this invention is 80%. The preferred concentration is 60 - 80%.

(2) Reducing agent

The reducing agent used in this invention functions to inhibit the oxidative polymerization of tribromophenol. Furthermore, when the reducing agent is used in conjunction with said non-hydrophilic solvent, the inhibitory effect on the oxidative polymerization of tribromophenol is further enhanced.

The reducing agent that can be used in this invention includes phenol compounds such as phenol, bromophenol, dibromophenol, 2,6-di-t-butyl-4-methylphenol (BHT), etc., sulfites such as ammonium sulfite, potassium sulfite, sodium sulfite, sodium hydrogensulfite, etc., and sulfides such as sodium sulfide, ammonium sulfide, potassium sulfide, etc., to name but a few. The level of addition of such reducing agent is 0.01 - 1.0 parts by weight to each 100 parts by weight of tribromophenol. If the level of addition is below 0.01 part by weight, the pot life of the aqueous tribromophenolate solution will be sacrificed by formation of red-brown polymers. If the level exceeds 1.0 part by weight, the reducing agent is not well soluble so that no appreciable effect of addition can be realized.

(3) Cyanuric chloride

For use in this invention, cyanuric chloride in the form of bulk powder can be directly subjected to the reaction. Alternatively, it can be dissolved or dispersed in the non-hydrophilic solvent before use.

(4) Solvent

The solvent for use in this invention is not critical in type only if it is non-hydrophilic. Thus, the solvent includes halogenated hydrocarbons such as methylene chloride, chloroform, carbon tetrachloride, trichloroethylene, perchloroethylene, tetrachloroethylene, etc., aromatic hydrocarbons such as benzene, toluene, xylene, etc., saturated hydrocarbons such as hexane etc., and halogen-substituted aromatic hydrocarbons such as chlorobenzene etc., among others. The preferred are solvents in which cyanuric chloride is well soluble, for example halogenated hydrocarbons such as chloroform and methylene chloride. For dissolving cyanuric chloride, two or more of these solvents can be used in combination. Moreover, the solvent for use in dissolving or dispersing cyanuric chloride may be different from the non-hydrophilic solvent for use in dissolving the tribromophenolate in water at a high concentration level. For dissolving the tribromophenolate, too, two or more non-hydrophilic solvents can be used in combination.

The solvent recovered by distillation can be reused as it is, or if necessary, the water contained can be removed with a dehydrating agent or the like. There is no particular limit to the amount of the solvent used for dissolving or dispersing cyanuric chloride but it is preferable to employ not less than 2.0 parts by weight of the solvent to each part by weight of cyanuric chloride. If the proportion of the solvent is less than the above limit, the reaction procedure may be interfered with. The non-hydrophilic solvent used for preparation of the tribromophenolate can be withdrawn from the top of the reactor after the preparation and, therefore, its amount is not restricted. However, it is preferably not less than 0.1 part by weight per part of tribromophenol. Below the above limit, preparation of the tribromophenolate is difficult. The preferred weight ratio of the non-hydrophilic solvent layer to the aqueous tribromophenolate solution layer after preparation of the solution is 1:5 through 1:2.

(5) Phase transfer catalyst

The phase transfer catalyst for use in this invention includes salts of quaternary phosphorus compounds such as triphenylbenzylphosphonium chloride, triphenylethylphosphonium bromide, butyltriphenylphosphonium chloride, phenacetyltriphenylphosphonium chloride, hexyltriphenylphosphonium bromide, octyltriphenylphosphonium bromide, tetraphenylphosphonium bromide, 2-methylbenzyltriphenylphosphonium bromide, methyltriphenylphosphonium iodide, phenacetyltriphenylphosphonium chloride, allyltriphenylphosphonium bromide, etc.; salts of quaternary nitrogen compounds such as tetramethylammonium chloride, tetramethylammonium bromide, tetraethylammonium chloride, tetraethylammonium bromide, tetrapropylammonium chloride, tetrapropylammonium bromide, tetrabutylammonium chloride, tetrabutylammonium bromide, trimethylphenylammonium chloride, trimethylphenylammonium bromide, triethylphenylammonium chloride, triethylphenylammonium bromide, trimethylbenzylammonium chloride, trimethylbenzylammonium bromide, triethylbenzylammonium chloride, triethylbenzylammonium bromide, tributylbenzylammonium chloride, tributylbenzylammonium bromide, dimethylbenzylphenylammonium chloride, dimethylbenzylphenylammonium bromide, tetrabenzylammonium chloride, tetrabenzylammonium bromide, tribenzylphenylammonium chloride, tribenzylphenylammonium bromide, trimethylcyclohexylammonium chloride, trimethylcyclohexylammonium bromide, tributylcyclohexylammonium chloride, tributylcyclohexylammonium bromide, trioctylmethylammonium chloride, trioctylmethylammonium bromide, trimethyl-n-laurylammonium chloride, trimethyl-n-laurylammonium bromide, n-laurylpyridinium chloride, n-laurylpyridinium bromide, n-stearylpyridinium chloride, n-stearylpyridinium bromide, etc.; crown ethers such as 15-crown-5, 18-crown-6, dibenzo-18-crown-6, dicyclohexyl-18-crown-6, dibenzo-24-crown-8, dicyclohexyl-24-crown-8 and so on. The level of addition based on cyanuric chloride is 0.1-10.0%, preferably 2.0-5.0%.

The phase transfer catalyst can be added to the tribromophenolate solution beforehand or to the cyanuric chloride solution.

(6) Production process

In the production process of this invention, a highly concentrated aqueous tribromophenolate solution of not less than 50% concentration is first prepared with the aid of a non-hydrophilic solvent and this solution is added dropwise to a solution (or suspension) of cyanuric chloride containing a phase transfer catalyst in a non-hydrophilic solvent or, alternatively, the phase transfer catalyst and powdery cyanuric chloride are added to the highly concentrated aqueous tribromophenolate solution. The preferred molar ratio of cyanuric chloride to tribromophenol is 1:2.94 - 3.60. After the above dripping or addition, the reaction system is aged where necessary and the non-hydrophilic solvent is removed from the reaction system at atmospheric or subatmospheric pressure. In this manner, tris(tribromophenoxy)-s-triazine of high purity can be obtained.

The reaction temperature is not so critical but when the recovered solvent was used in dripping the aqueous tribromophenolate solution to a solution or dispersion of cyanuric chloride, the reaction system is preferably cooled to 10°C or below up to immediately before the dripping of the aqueous tribromophenolate solution for suppressing the hydrolysis of cyanuric chloride. After the dripping has started, the reaction temperature may be increased up to the boiling point of the solvent. Preferably, however, the dropwise addition is carried out at a low temperature to minimize the hydrolysis of cyanuric chloride.

The TBP-TA synthesis reaction product obtained with a TBP-TA yield of not less than 90% has a purity of not less than 90% TBP-TA and a melting point between 225-235°C. By formulating a styrenic resin with such a TBP-TA synthesis reaction product having a purity of not less than 90% TBP-TA and an alkaline earth metal compound, there can be obtained a resin composition enabling production of shaped articles with very satisfactory light resistance, heat resistance, mechanical strength, and flame retardancy.

The melting point value of TBP-TA varies somewhat according to the measuring instrument used but a single sharp endothermic peak is invariably obtained in the temperature range of 228-234°C in differential thermal analysis.

The object of the present invention can be accomplished more effectively when a TBP-TA synthesis reaction product with a yield of not less than 95% is employed.

2) Alkaline earth metal compound

The term "alkaline earth metal compound" as used throughout this specification means any compound containing an alkaline earth metal atom selected from the group consisting of calcium (Ca), strontium (Sr), barium (Ba), radium (Ra), beryllium (Be), and magnesium (Mg) and not containing metal atoms other than said alkaline earth metal atoms, such as aluminum (Al) and zinc (Zn) atoms. Excluded are further soap type alkaline earth metal compounds.

The preferred alkaline earth metal compound for the purposes of the present invention includes the hydroxides and carbonates of alkaline earth metals because they are basic and, hence, neutralize acidic matter (Claim 6). As said hydroxides, such species as magnesium hydroxide, calcium hydroxide, barium hydroxide, etc. can be mentioned and the anhydrous compounds not containing water of crystallization are useful. The carbonates mentioned above are magnesium carbonate, calcium carbonate, and barium carbonate, among others. These compounds can be used singly or in combination.

3) Epoxy compound

The epoxy compound that can be used in the present invention includes but is not limited to bisphenol A epoxy resin which is a polycondensation product of bisphenol A having an epoxy equivalent of 170-10,000 with epichlorohydrin, tetrabromobisphenol A epoxy resin which is a product of polycondensation between tetrabromobisphenol A having an epoxy equivalent of 328-20,000 and epichlorohydrin, phenol novolac epoxy resin, brominated novolac epoxy resin, polyphenol epoxy resin such as bisphenol H diglycidyl ether, tetramethylbisphenol diglycidyl ether, etc., and polyalcohol epoxy resin such as trimethylolpropane triglycidyl ether and neopentyl glycol diglycidyl ether, among others.

In the present invention, a further improvement in heat resistance can be obtained by addition of the epoxy compound (Claim 3).

4) Stabilizer

The benzotriazole light stabilizer that can be used in the present invention includes but is not limited to 2-(2'-hydroxy-3'-t-butyl-5'-methylphenyl)-5-chlorobenzotriazole, 2-(2'-hydroxy-3',5'-di-t-butylphenyl)benzotriazole, and 2-(2'-hydroxy-3',5'-di-t-amylphenyl)benzotriazole, among others.

The hindered amine light stabilizer that can be used includes but is not limited to bis(2,2,6,6-tetramethyl-4-piperidinyl) sebacate, bis(1,2,2,6,6-pentamethyl-4-piperidyl)-2-(3,5-di-t-butyl-4-hydroxybenzyl)-2-n-butyl malonate, 4-hydroxy-2,2,6,6-tetramethyl-1-piperidineethanol-succinic acid polyester, [4-(4-hydroxy-3,5-di-t-butylphenyl)propionyl]-N-(4-hydroxy-3,5-di-t-butylphenyl)methyl-2,2,6,6-tetramethylpiperidine, bis[N-methyl-(2,2,6,6-tetramethylpiperidyl) sebacate, and tetrakis(2,2,6,6-tetramethyl-4-piperidyl)-1,2,3,4-butanetetracarboxylate, among others.

The phenolic heat stabilizer that can be used includes phenolic compounds containing hindered phenol groups such as tetrakis[methylene-3-(3',5'-di-t-butyl-4-hydroxyphenyl)propionate]methane, n-octadecyl-β-(4'-hydroxy-3',5'-di-t-butylphenyl) propionate, 1,3,5-trimethyl-2,4,6-tris(3,5-di-t-butyl-4-hydroxybenzyl)benzene, N,N'-bis-3-(3',5'-di-t-butyl-4'-hydroxyphenyl)propionylhexamethyldiamine, and so on.

The phosphite heat stabilizer that can be used includes but is not limited to pentaerythritol diphosphite compounds such as distearylpentaerythritol diphosphite, bis(2,4-di-t-butylphenyl)pentaerythritol diphosphite, bis(2,6-di-t-butyl-4-methylphenyl)pentaerythritol diphosphite, dinonylphenylpentaerythritol diphosphite, and so on.

The organotin heat stabilizer that can be used includes organotin compounds such as poly(di-n-octyl maleate), poly(di-n-butyltin maleate), dibutyltin 3-mercaptopropionate, di-n-octyltin 3-mercaptopropionate, dibutyltin mercaptoacetate, diethylene glycol bis(butyltin thioacetate), dibutyltin sulfide, dioctylsulfide, dibutyltin dioctylmercaptide, dimethyltin bis(ethylene glycol monothioglycolate), dibutyltin bis(ethylene glycol monothioglycolate), and so on.

The inorganic heat stabilizer that can be employed includes but is not limited to naturally-occurring hydrotalcites such as $Mg_{4.2}Al_2OH_{12.4}CO_3$, $Mg_6Al_2OH_{16}CO_3 \cdot 4H_2O$, etc. and synthetic hydrotalcites such as magnesium aluminum hydroxycarbonate hydrate, and so on. Particularly preferred are $Mg_{4.2}Al_2OH_{12.4}CO_3$, which features only a minimal weight loss on heating and inorganic compounds containing the same. However, when hydrotalcites are used concomitantly, the level of addition must be adjusted for its loss on heating.

In the present invention, addition of such a light stabilizer results in a further enhancement of light resistance and addition of such a heat stabilizer leads to increased heat resistance (Claim 5).

These stabilizers can be used singly or in combination. Although other types of stabilizers can also be used concomitantly, there are cases in which light resistance and/or heat resistance is adversely affected as the antagonistic effect among stabilizers and/or with respect to the resin composition as a whole.

5) Thermoplastic styrenic resin

The thermoplastic styrenic resin that can be used as the base resin in accordance with the present invention includes polystyrene, high impact polystyrene (HI-PS), acrylonitrile-styrene copolymer (AS), acrylonitrile-butadiene-styrene (ABS), and various polymer alloys containing such styrenic resin (e.g. acrylonitrile-butadiene-styrene/polycarbonate alloy (ABS-PC resin).

6) Other auxiliary additives

In the composition of the invention, there can be incorporated other halogen-containing or phosphorus-containing flame retardants, antimony-containing flame retardants such as antimony trioxide, antimony pentoxide, etc., fire-retardant resins, metal oxides, and so on.

Furthermore, when the composition is put to use, suitable other antioxidants and ultraviolet absorbers, infrared absorbers, antistatic agents, inorganic fillers, solvents, plasticizers, crystallization nucleating agents, pigments, etc. can be used as additives. However, antagonism may develop depending on types of compounds added.

7) Compounding methods and formulas

The method for addition of each of the alkaline earth metal compound and other ingredients is not particularly restricted. For example, direct addition to the resin or addition to TBP-TA can be mentioned. However, for improved heat resistance and, hence, reduced discoloration, it is preferable to add the alkaline earth metal compound and other ingredients, except for TBP-TA, to the resin in the first place and, then, add TBP-TA.

There is no particular limitation on the formula but relative to 100 parts of thermoplastic styrenic resin, TBP-TA is generally used in a proportion of 1-90 parts, preferably 5-50 parts. If the proportion of TBP-TA is less than 1 part, the tendency will be toward inadequate flame retardancy, while the use of more than 90% of TBP-TA tends to result in reduced mechanical strength.

The level of addition of said alkaline earth metal compound, epoxy compound, light stabilizer, and heat stabilizer may each be 0.05-10 parts, preferably 0.05-5 parts, based on 100 parts of thermoplastic styrenic resin. If the level of addition is less than 0.05 part, no sufficient effect will be obtained. Conversely when more than 10 parts is added, moldability, fluidity of molten resin, and impact strength will be sacrificed.

Therefore, relative to 100 parts of thermoplastic styrenic resin, TBP-TA is preferably used in the range of 1-90 parts and the alkaline earth metal compound in the range of 0.05-10 parts (Claim 2). When the epoxy compound is added, it is preferably used in a proportion of 0.05-10 parts (Claim 4).

When antimony trioxide is concomitantly added as an auxiliary flame retardant, it is used in a proportion of 1-30 parts, preferably 2-20 parts. If the proportion is less than 1 part, flame retardancy may not be sufficient. Conversely when the proportion exceeds 30 parts, the synergistic effect of addition may be rather sacrificed.

8) Molding temperature

The molding temperature for the composition of the present invention can be advantageously selected from the range of 200-280°C. If the temperature is below 200°C, no satisfactory resin fluidity will be obtained. At any temperature over 280°C, the risk of discoloration and decomposition will be increased.

The high-purity TBP-TA specifically used in the composition of the present invention is compatible with thermoplastic styrenic resin and, therefore, this compound itself uniformly disperses itself into the resin. This good dispersibility, coupled with the use of the alkaline earth metal compound, imparts not only very satisfactory flame retardancy but also high light resistance, heat resistance, and mechanical strength to thermoplastic styrenic resin, with particularly remarkable improvement in heat resistance.

The above physical properties can be further improved by incorporating said epoxy compound and heat stabilizer.

PREFERRED EMBODIMENTS OF THE INVENTION

The following examples are intended to describe several preferred embodiments and effects of the invention in further detail but should by no means be construed as defining the spirit and scope of the invention. In the examples, all percents (%) are by weight.

Production Example A (production of TBP-TA for the invention)

A reactor equipped with a stirrer, condensor, thermometer, and drip funnel was charged with 206.5 g of methylene chloride and 18.4 g (0.10 mol) of cyanuric chloride, followed by addition of 0.7 g of triphenylethylphosphonium bromide.

Then, an aqueous tribromophenolate solution prepared from 173.9 g of water, 12.8 g (0.32 mol) of sodium hydroxide, and 102.3 g (0.31 mol) of tribromophenol was added dropwise with the temperature of the system being maintained at 30°C.

After completion of dropwise addition, the reaction mixture was allowed to ripen at the reflux temperature of methylene chloride for 3 hours, at the end of which time the methylene chloride was distilled off at atmospheric pressure. The reaction product was rinsed with methanol once, filtered, and dried to provide 103.1 g (yield 96.5%) of 2,4,6-tris (2,4,6-tribromophenoxy)-1,3,5-triazine.

Production Example B (production of low-melting TBP-TA)

A reactor equipped with a stirrer, condensor, thermometer, and drip funnel was charged with 30.5 g of acetone and 18.4 g (0.10 mol) of cyanuric chloride.

Then, an aqueous tribromophenolate solution prepared from 305.5 g of water, 12.8 g (0.32 mol) of sodium hydroxide, and 102.6 g (0.31 mol) of tribromophenol was added dropwise, with the temperature of the reaction system being maintained at 30°C.

After completion of dropwise addition, a ripening reaction was carried out at 50°C for 48 hours, after which the reaction mixture was filtered and dried to provide 80.7 g (yield 75.6%) of 2,4,6-tris(2,4,6-tribromophenoxy)-1,3,5-triazine.

Production Example C (production of non-melting brominated aromatic s-triazine)

A reactor equipped with a stirrer, condensor, thermometer, and drip funnel was charged with 206.5 g of methylene chloride and 18.4 g (0.10 mol) of cyanuric chloride, followed by addition of 0.7 g of triphenylethylphosphonium bromide.

Then, an aqueous solution prepared from 332.7 g of water, 12.0 g (0.30 mol) of sodium hydroxide, 56.3 g (0.17 mol) of tribromophenol, and 38.1 g (0.07 mol) of tetrabromobisphenol A was added dropwise, with the temperature of the reaction system being maintained at 30°C.

After completion of dropwise addition, a ripening reaction was carried out at the reflux temperature of methylene chloride for 3 hours, at the end of which time the methylene chloride was distilled off at atmospheric pressure. The reaction product was rinsed with methanol once, filtered, and dried to provide 93.3 g of white powder.

The physical properties of TBP-TA or brominated aromatic s-triazine obtained in Production Example A-C are shown below in Table 1.

Table 1

| | Differential thermal analysis (*) | | Bromine content |
|---|---|---|---|
| | m.p. | 20% weight-loss temperature | |
| TBP-TA of Production Example A | 230°C | 410°C | 67.4% |
| TBP-TA of Production Example B | 213°C, 218°C | 400°C | 64.4% |
| Compound of Production Example C | None | 420°C | 60.0% |

(*) Determined with a Rigaku K.K. TG-DTA Standard Model in a nitrogen stream at a temperature incremental rate of 10°C/min.

Examples 1-11 and Comparative Examples 1-6

The TBP-TA or brominated aromatic s-triazine compound obtained in Production Example A, Production Example B, or Production Example C was mixed with the alkaline earth metal compound, epoxy compound, light stabilizer, heat stabilizer, and antimony trioxide shown in Table 2 as well as HI-PS resin (Estyrene H-65; Nippon Steel Chemical Co., Ltd.) according to the formulas shown in Table 3. Then, using a 20 m/m (in. dia.) extrusion machine controlled to 220°C, each formulation was compounded and extruded through a 3 m/m (in. dia.) die and the resulting strand was cut into pellets.

The pellets were fed to an injection machine controlled at 240°C and immediately injection-molded to prepare a testpiece. Using this testpiece, light resistance, heat resistance, flame retardancy, and impact strength parameters were determined and physical properties were evaluated. The results are also shown in Table 3.

| | |
|---|---|
| Light resistance ($\Delta E$): | The testpiece was exposed to a xenon whether-o-meter (80°C) at the illumination intensity of 0.35 w/m$^2$ for 300 hours and the degree of color change was determined with a color difference meter. The smaller the value is, the higher is light resistance. |
| Heat resistance ($\Delta E$): | The resin was allowed to reside within the injection machine cylinder at the injection temperature for 20 minutes and the change in color was measured with a color difference meter. The smaller the value is, the higher is heat resistance. |
| Heat resistance (appearance): | Silver streaks (number of streaks) on the surface of the molding (60 x 60 x 3 mm, both sides) were visually counted. The scoring schema: o for 0 streaks, $\Delta$ for 1-4 streaks, and x for 5 or more streaks. |
| Flame retardancy: | Tested as per UL-94 (1/16 inch). The smaller the value is, the greater is flame retardancy. |
| Impact strength: | Tested as per JIS-K6871. The larger the value is, the higher is impact strength. |

Table 2

| | |
|---|---|
| (a) | Magnesium hydroxide: Schema 5A (Kyowa Kagaku Kogyo) |
| (b) | Calcium carbonate: NCC#2310 (Nitto Powder Chemical Industry) |
| (e) | Epoxy compound (epoxy equivalent 190) Adeka Sizer-EP13 (Asahi Denka Kogyo K.K.) |
| (f) | Epoxy compound (epoxy equivalent 1000) SR-T1000 (Sakamoto Pharmaceutical Industry) |
| (g) | Epoxy compound (epoxy equivalent 190) EPPN-201 (Nippon Kayaku Co. Ltd.) |
| (h) | [Benzotriazole light stabilizer] 2-(2'-Hydroxy-3',5'-di-t-butylphenyl)benzotriazole |

Table 2   (continued)

| | |
|---|---|
| (i) | [Hindered amine light stabilizer]<br>Bis(2,2,6,6-tetramethyl-4-piperidyl) sebacate |
| (j) | [Hindered phenol heat stabilizer]<br>Pentaerythrityl tetrakis[3-(3,5-di-t-butyl-4-hydroxyphenyl)-propionate] |
| (k) | [Phosphite heat stabilizer]<br>Bis(2,6-di-t-butyl-4-methylphenyl)pentaerythritol diphosphite |
| (l) | [Organotin heat stabilizer]<br>Poly(di-n-butyltin maleate) |
| (m) | [Hydrotalcite-containing inorganic heat stabilizer]<br>MC-61 (Sankyo Yuki Gosei Co.) |

Table 3

| | | Example | | | | | | Comparative Example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| | HI poly-styrene | 100 | 100 | 100 | 100 | 100 | 100 | 100 | 100 | 100 | 100 | 100 | 100 |
| | Production Example A | 15.0 | 15.0 | 15.0 | 15.0 | 15.0 | 15.0 | 15.0 | – | – | 15.0 | 15.0 | 15.0 |
| | Production Example B | – | – | – | – | – | – | – | 15.0 | – | – | – | – |
| | Production Example C | – | – | – | – | – | – | – | – | 15.0 | – | – | – |
| Composition, in parts by weight | (a) | 0.3 | 0.5 | – | 0.5 | 0.5 | – | – | 0.5 | 0.5 | – | – | – |
| | (b) | – | – | 0.3 | – | – | 0.3 | – | – | – | – | – | – |
| | (c) | – | – | – | – | 0.5 | 0.3 | – | – | – | – | – | – |
| | (d) | – | – | – | – | – | – | – | – | – | – | – | – |
| | (e) | – | – | – | 0.5 | – | 0.5 | – | – | – | – | – | – |
| | (h) | – | – | – | – | – | – | – | – | – | 0.3 | – | – |
| | (i) | – | – | – | – | – | – | – | – | – | – | 0.3 | – |
| | (j) | – | – | – | – | – | – | – | – | – | – | 0.3 | – |
| | (m) | – | – | – | – | – | – | – | – | – | – | – | 0.3 |
| | Sb$_2$O$_3$ | 5.0 | 5.0 | 5.0 | 5.0 | 5.0 | 5.0 | 5.0 | 5.0 | 5.0 | 5.0 | 5.0 | 5.0 |
| | Heat resistance ($\Delta E$) | 8.0 | 7.8 | 8.4 | 7.5 | 7.7 | 8.1 | 26.0 | 34.0 | 32.0 | 30.0 | 31.0 | 10.2 |
| | Heat resistance (appearance) | O | O | O | O | O | O | O | △ | △ | O | O | △ |
| | Light resistance ($\Delta E$) | 28.3 | 26.5 | 29.1 | 29.1 | 11.7 | 28.5 | 30.0 | 34.6 | 31.2 | 13.4 | 17.5 | 20.5 |
| | Flame retardancy | V-0 | V-0 | V-0 | V-0 | V-0 | V-0 | V-0 | V-2 | V-1 | V-0 | V-0 | V-0 |
| | Impact strength (kgcm/cm) | 6.7 | 6.8 | 6.5 | 6.9 | 6.8 | 6.6 | 6.8 | 6.7 | 6.5 | 6.8 | 6.8 | 6.5 |

Examples 7-12 and Comparative Examples 7-15

The TBP-TA obtained in Production Example A was mixed with the alkaline earth metal compound, epoxy compound, light stabilizer, heat stabilizer (Table 2), antimony trioxide, and ABS resin (Clarastic MHB, Sumitomo-Dow) according to the formulas shown in Table 4. Using a 20 m/m (in. dia.) extruder set to 230°C, each formulation was compounded and extruded from a'3 m/m (in. dia.) die. The resulting strand was cut into pellets.

The pellets were fed to an injection machine set to 240°C and immediately injected to prepare a testpiece. Using this testpiece, light resistance, heat resistance, flame retardancy, and impact strength parameters were determined by the methods shown in Table 2 and physical properties were evaluated by the evaluation schema shown in the same table. The results are presented in Table 4.

Table 4

| Composition, in parts by weight | Example 7 | Example 8 | Example 9 | Example 10 | Example 11 | Example 12 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|---|---|---|---|---|
| ABS resin | 100 | 100 | 100 | 100 | 100 | 100 | 100 | 100 | 100 | 100 | 100 | 100 | 100 | 100 | 100 |
| Production Example A | 18.0 | 18.0 | 18.0 | 18.0 | 18.0 | 40.0 | 18.0 | 18.0 | 18.0 | 18.0 | 18.0 | 18.0 | 18.0 | 18.0 | 40.0 |
| (a) | 0.5 | 1.0 | 1.0 | 1.0 | 1.0 | 2.0 | - | - | - | - | - | - | - | - | 2.0 |
| (e) | - | 0.5 | - | - | 0.5 | 0.5 | - | 0.5 | - | - | 0.5 | 0.5 | 0.5 | 0.5 | - |
| (f) | - | - | 0.5 | - | - | - | - | - | 0.5 | - | - | - | - | - | - |
| (g) | - | - | - | 0.5 | - | - | - | - | - | 0.5 | - | - | - | - | - |
| (h) | - | - | - | 0.3 | - | 0.3 | - | - | - | 0.3 | - | - | 0.3 | 0.3 | 0.3 |
| (i) | - | 0.3 | - | - | 0.3 | - | - | 0.3 | - | - | 0.3 | 0.3 | - | - | - |
| (j) | - | - | - | 0.3 | 0.3 | 0.3 | - | - | 0.3 | 0.3 | 0.3 | 0.3 | 0.3 | 0.3 | 0.3 |
| (k) | - | - | 0.3 | - | - | - | - | - | - | 0.3 | - | - | - | - | - |
| (l) | - | - | - | - | 0.3 | - | - | - | - | - | - | - | 0.3 | 0.1 | - |
| (m) | - | - | - | - | - | - | - | - | - | - | - | 0.3 | - | - | - |
| Sb2O3 | 6.0 | 6.0 | 6.0 | 6.0 | 6.0 | 2.0 | 6.0 | 6.0 | 6.0 | 6.0 | 6.0 | 6.0 | 6.0 | 6.0 | 2.0 |
| Heat resistance (ΔE) | 8.5 | 5.3 | 7.8 | 5.1 | 6.5 | 4.8 | 15.8 | 13.6 | 20.0 | 14.2 | 12.7 | 10.8 | 7.6 | 13.4 | 11.5 |
| Heat resistance (appearance) | ○ | ○ | ○ | ○ | ○ | ○ | ○ | ○ | ○ | ○ | △ | △ | △ | ○ | △ |
| Light resistance (ΔE) | 19.2 | 18.5 | 19.2 | 4.8 | 6.7 | 8.4 | 19.5 | 19.0 | 19.8 | 5.2 | 8.7 | 8.2 | 4.6 | 5.8 | 12.7 |
| Flame retardancy | V-0 | V-0 | V-0 | V-0 | V-0 | V-0 | V-0 | V-0 | V-2 | V-1 | V-0 | V-0 | V-0 | V-0 | V-0 |
| Impact strength (kgcm/cm) | 9.1 | 9.4 | 9.0 | 9.6 | 9.3 | 9.8 | 7.8 | 8.0 | 7.9 | 8.2 | 8.1 | 8.4 | 8.5 | 8.3 | 9.0 |

Examples 13-20 and Comparative Examples 16-23

The ABS resin compositions prepared by the two alternative methods described below were evaluated for heat resistance. With the injection machine cylinder temperature set to 260°C, the resin was allowed to reside within the cylinder for 10 minutes and the resulting change in color (ΔE) was measured with a color difference meter for the evaluation of heat resistance. The results are presented below in Table 5.

The smaller the value is, the smaller is the color change and the higher is heat resistance.

11

[Compounding method 1]

The various ABS resins shown in Table 5 were respectively melted using a hot roll at 200°C. Then, the TBP-TA obtained in Production Example A, the alkaline earth metal compound (magnesium hydroxide, Schema 5A), epoxy compound (Adeka Sizer EP-13), and antimony trioxide, all shown in Table 5, were simultaneously added and the mixture was kneaded for 6 minutes. The resin compound thus prepared was taken out in a sheet form, allowed to cool and solidify, and crushed to provide pellets.

[Compounding method 2]

The various ABS resins shown in Table 5 were respectively melted using a hot roll at 200°C. To each melt, the alkaline earth metal compound (magnesium hydroxide, Schema 5), epoxy compound (Adeka Sizer EP-13), and antimony trioxide shown in Table 5 were added and the whole mixture was kneaded for 3 minutes.

Then, the TBP-TA obtained in Production Example A was added and the whole mixture was kneaded for a further 3 minutes. The kneaded resin was taken out in a sheet form, allowed to cool and solidify, and crushed to provide pellets.

Table 5

| | Example | | | | | | | | Comparative Example | | | | | | | |
|---|---|---|---|---|---|---|---|---|---|---|---|---|---|---|---|---|
| | 13 | 14 | 15 | 16 | 17 | 18 | 19 | 20 | 16 | 17 | 18 | 19 | 20 | 21 | 22 | 23 |
| ABS resin*1 | 100 | 100 | 100 | 100 | 100 | 100 | 100 | 100 | 100 | 100 | 100 | 100 | 100 | 100 | 100 | 100 |
| TBP-TA of Production Example A | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| Alkaline earth metal compound (a) | 1.0 | 1.0 | 1.0 | 1.0 | 1.0 | 1.0 | 1.0 | 1.0 | - | - | - | - | - | - | - | - |
| Epoxy compound (e) | 1.0 | 1.0 | 1.0 | 1.0 | 1.0 | 1.0 | 1.0 | 1.0 | - | - | - | - | - | - | - | - |
| Sb$_2$O$_3$ | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| (Compound method 1) Heat resistance (ΔE) | 4.1 | 9.4 | 5.8 | 5.6 | 10.8 | 14.7 | 14.4 | 9.4 | 13.6 | 18.8 | 15.2 | 12.0 | 21.5 | 23.7 | 29.7 | 18.2 |
| Heat resistance (appearance) | ○ | ○ | ○ | ○ | ○ | ○ | ○ | ○ | × | × | × | × | × | × | × | × |
| (Compound method 2) Heat resistance (ΔE) | 3.5 | 7.6 | 5.1 | 4.7 | 7.2 | 11.2 | 10.9 | 7.6 | 13.8 | 18.5 | 15.3 | 11.8 | 21.0 | 24.2 | 29.2 | 18.0 |
| Heat resistance (appearance) | ○ | ○ | ○ | ○ | ○ | ○ | ○ | ○ | × | × | × | × | × | × | × | × |

(*1)
Example 13, Comparative Example 16: Stylac 101 (Asahi Chemical Industry Co., Ltd.)
Example 14, Comparative Example 17: Cevian V-450 (Daicel Chemical Industries, Ltd.)
Example 15, Comparative Example 18: Toyolac 500 (Toray Industries, Inc.)
Example 16, Comparative Example 19: Estyrene 300NT (Nippon Steel Chemical Co., Ltd.)
Example 17, Comparative Example 20: JSR ABS 35 (Japan Synthetic Rubber Co., Ltd.)
Example 18, Comparative Example 21: Diapet 1001 (Mitsubishi Rayon Co., Ltd.)
Example 19, Comparative Example 22: Kaneace MUH (Kaneka Corporation)
Example 20, Comparative Example 23: Clarastic MHB (Sumitomo-Dow)

Examples 21-25 and Comparative Examples 24-26

The TBP-TA or brominated aromatic s-triazine compound obtained in Production Example A, Production Example B, or Production Example C was mixed with the alkaline earth metal compound, light stabilizer, and heat stabilizer shown in Table 2 according to the formulas shown below in Table 6 for 3 minutes. Then, antimony trioxide and ABS-PC resin (Upilon MB-2210; Mistubishi Gas Chemical Company, Inc.) were added in the proportions shown in the same Table and using a 20 m/m (in. dia.) extruder set to 250°C, each formulation was extruded from a 3 m/m die. The resulting strand was cut into pellets.

The pellets were fed to an injection machine set to 250°C and immediately injection-molded to prepare a testpiece. Using this testpiece, light resistance, heat resistance, flame retardancy, and impact strength parameters were determined by the methods described in Examples 1-11 and physical properties were evaluated. The results are shown in Table 6.

Table 6

| | | Example | | | | | Comparative Example | | |
|---|---|---|---|---|---|---|---|---|---|
| | | 21 | 22 | 23 | 24 | 25 | 24 | 25 | 26 |
| Composition, in parts by weight | ABS-PC resin | 100 | 100 | 100 | 100 | 100 | 100 | 100 | 100 |
| | TBP-TA of Production Example A | 7.5 | 7.5 | 7.5 | 7.5 | 7.5 | 7.5 | – | – |
| | TBP-TA of Production Example B | – | – | – | – | – | – | 7.5 | – |
| | Compound of Production Example C | – | – | – | – | – | – | – | 7.5 |
| | (a) | 0.2 | 0.1 | 0.1 | 0.1 | 0.1 | – | 0.2 | 0.2 |
| | (f) | – | 0.1 | – | – | 0.05 | – | – | – |
| | (h) | – | – | 0.1 | – | 0.05 | – | – | – |
| | (j) | – | – | – | 0.1 | 0.05 | – | – | – |
| | Sb2O3 | 2.5 | 2.5 | 2.5 | 2.5 | 2.5 | 2.5 | 2.5 | 2.5 |
| Light resistance (ΔE) | | 22.0 | 24.2 | 18.8 | 23.4 | 17.3 | 39.4 | 34.7 | 33.3 |
| Heat resistance (ΔE) | | 7.0 | 6.5 | 6.8 | 6.0 | 5.7 | 29.3 | 21.6 | 18.7 |
| Flame retardancy | | V-0 | V-0 | V-0 | V-0 | V-0 | V-2 | V-1 | V-1 |
| Impact strength (kgcm/cm) | | 3.0 | 2.8 | 3.3 | 3.4 | 3.2 | 1.0 | 1.5 | 2.0 |

## Claims

1. A flame retardant thermoplastic styrenic resin composition comprising a thermoplastic styrenic resin, 2,4,6-tris (2,4,6-tribromophenoxy)-1,3,5-triazine melting at 225-235°C, and an alkaline earth metal compound, that does not comprise other metal atoms than alkaline earth metal atoms, soap type alkaline earth metal compounds being excluded.

2. The composition of claim 1 comprising, based on 100 parts by weight of said thermoplastic styrenic resin, 1-90 parts by weight of said 2,4,6-tris(2,4,6-tribromophenoxy)-1,3,5-triazine and 0.05-10 parts by weight of said alkaline earth metal compound.

3. The composition of claim 1 or 2 further comprising an epoxy compound.

4. The composition of claim 3 comprising, based on 100 parts by weight of said thermoplastic styrenic resin, 0.05-10 parts by weight of said epoxy compound.

5. The composition claimed in any of claims 1-4 further comprising at least one member selected from the group consisting of benzotriazole light stabilizers, hindered amine light stabilizers, phenolic heat stabilizers, phosphite heat stabilizers, and organotin heat stabilizers.

6. The composition claimed in any of claims 1-5 wherein said alkaline earth metal compound is a hydroxide or carbonate.

## Patentansprüche

1. Flammhemmende thermoplastische Styrolharzzusammensetzung, enthaltend ein thermoplastisches Styrolharz, 2,4,6-Tris(2,4,6-tribromphenoxy)-1,3,5-triazin, das bei 225 bis 235°C schmilzt, und eine Erdalkalimetallverbindung, die keine anderen Metallatome als Erdalkalimetallatome enthält, wobei Erdalkalimetallverbindungen des Seifentyps ausgeschlossen sind.

2. Zusammensetzung nach Anspruch 1, die, bezogen auf 100 Gewichtsteile des thermoplastischen Styrolharzes, 1 bis 90 Gewichtsteile des 2,4,6-Tris(2,4,6-tribromphenoxy)-1,3,5-triazins und 0,05 bis 10 Gewichtsteile der Erdalkalimetallverbindung enthält.

3. Zusammensetzung nach Anspruch 1 oder 2, die weiterhin eine Epoxyverbindung enthält.

4. Zusammensetzung nach Anspruch 3, die, bezogen auf 100 Gewichtsteile des thermoplastischen Styrolharzes, 0,05 bis 10 Gewichtsteile der Epoxyverbindung enthält.

5. Zusammensetzung nach einem der Ansprüche 1 bis 4, die weiterhin mindestens ein Mitglied aus der Gruppe der Benzotriazol-Lichtstabilisatoren, als Lichtstabilisatoren dienenden sterisch gehinderten Amine, phenolischen Wärmestabilisatoren, Phosphit-Wärmestabilisatoren und Organozinn-Wärmestabilisatoren enthält.

6. Zusammensetzung nach einem der Ansprüche 1 bis 5, wobei die Erdalkalimetallverbindung ein Hydroxid oder Carbonat ist.

## Revendications

1. Composition de résine styrénique thermoplastique ignifuge comprenant une résine styrénique thermoplastique, de la 2,4,6-tris(2,4,6-tribromophénoxy)-1,3,5-triazine fondant à 225-235°C, et un composé d'un métal alcalino-terreux, qui ne comprend pas d'autres atomes d'un métal que des atomes d'un métal alcalino-terreux, les composés d'un métal alcalino-terreux de type savon étant exclus.

2. Composition selon la revendication 1 comprenant, pour 100 parties en poids de ladite résine styrénique thermoplastique, de 1 à 90 parties en poids de ladite 2,4,6-tris(2,4,6-tribromophénoxy)-1,3,5-triazine et de 0,05 à 10 parties en poids dudit composé d'un métal alcalino-terreux.

**3.** Composition selon la revendication 1 ou 2 comprenant, en outre, un composé époxy.

**4.** Composition selon la revendication 3 comprenant, pour 100 parties en poids de ladite résine styrénique thermoplastique, de 0,05 à 10 parties en poids dudit composé époxy.

**5.** Composition selon l'une quelconque des revendications 1 à 4 comprenant, en outre, au moins un constituant choisi dans le groupe constitué par des stabilisants à la lumière de type benzotriazole, des stabilisants à la lumière de type amine stériquement encombrée, des stabilisants à la chaleur de type phénolique, des stabilisants à la chaleur de type phosphite et des stabilisants à la chaleur de type organoétain.

**6.** Composition selon l'une quelconque des revendications 1 à 5 dans laquelle ledit composé d'un métal alcalino-terreux est un hydroxyde ou un carbonate.